# FASCICULE DE BREVET EUROPEEN

(11) **EP 1 456 706 B1**
(45) Date de publication et mention de la délivrance du brevet: **20.07.2005**
(21) Numéro de dépôt: 02805361.9
(22) Date de dépôt: 10.12.2002
(51) Int. Cl.: G02B 17/08, G02B 23/06

(54) **COMBINAISON OPTIQUE MULTICHAMP DE TYPE CASSEGRAIN**
OPTISCHE KOMBINATION DES MEHRFELD-CASSEGRAIN-TYPS
MULTIPLE FIELD CASSEGRAIN-TYPE OPTICAL COMBINATION

(30) Priorité: 14.12.2001 FR 0116240
(43) Date de publication de la demande: 15.09.2004
(73) Titulaire: Thales, 75008 Paris (FR)
(72) Inventeur: DOITTAU, François-Xavier, 94117 ArcueilCedex (FR); MOREAU, Dominique, 94117 ArcueilCedex (FR); ROLLIN, Joel, 94117 ArcueilCedex (FR)
(74) Mandataire: Brochard, Pascale
(86) Numéro de dépôt international: PCT/FR2002/004264
(87) Numéro de publication internationale: WO 2003/054609

(56) Documents cités:
- EP-A- 0 535 410
- FR-A- 2 764 080
- US-A- 3 781 552
- US-A- 4 988 858
- US-A- 4 993 818
- US-A- 5 477 395

## Description

L'invention concerne le domaine des combinaisons optiques multichamps multispectrales destinées à être intégrées dans un dispositif optique, notamment dans un dispositif d'imagerie.

Les dispositifs d'imagerie sont utilisés dans des applications aéroportées, navales ou terrestres, dans lesquelles les dispositifs d'imagerie réalisent par exemple des fonctions de détection, de reconnaissance et d'identification de cibles, des fonctions de poursuite et de localisation de cibles, des fonctions d'illumination laser et de contre-mesure laser.

Le dispositif d'imagerie comporte une optique d'entrée qui est avantageusement constituée, pour tout ou partie, par la combinaison optique multichamp multispectrale objet de l'invention. Ladite combinaison optique concerne préférentiellement l'optique d'entrée d'une ou de plusieurs voies de réception de signal lumineux. Les voies de réception sont par exemple au nombre d'au moins trois ayant respectivement pour domaine spectral de sensibilité, le proche infrarouge ou bande I de l'infrarouge, l'infrarouge moyen ou bande II de l'infrarouge, l'infrarouge lointain ou bande III de l'infrarouge. Les trois voies de réception sont alors par exemple isolées les unes des autres à l'aide de séparateurs spectraux. De préférence, la voie proche infrarouge est multitâche, incluant télémétrie, détection de tache laser, imageries passive et active, tandis que les voies infrarouge moyen et lointain sont dédiées à l'imagerie passive.

Une combinaison optique multichamp multispectrale comprend généralement au moins deux champs et couvre généralement au moins deux domaines spectraux de sensibilité. Les différents champs ont différentes fonctions, par exemple le champ le plus grand est utilisé pour réaliser l'acquisition des cibles tandis que le champ le plus petit est utilisé pour réaliser l'identification et/ou la poursuite des dites cibles. Les domaines spectraux de sensibilité de la combinaison optique multichamp multispectrale sont par exemple le domaine du visible d'une part et celui de l'infrarouge d'autre part.

Une combinaison optique multichamp multispectrale a plusieurs inconvénients parmi lesquels, lorsque le domaine spectral s'étend et lorsque le nombre de champs différents augmente, une dispersion chromatique importante associée à une architecture volumineuse et complexe. Deux types de combinaisons optiques sont à priori envisageables, à savoir les combinaisons optiques dioptriques, c'est-à-dire à base de lentilles, et les combinaisons optiques catadioptriques, c'est-à-dire à base de miroirs. Une combinaison optique multispectrale dioptrique présente habituellement une dispersion chromatique très importante. Une combinaison optique multichamp catadioptrique présente habituellement un volume et une complexité importants.

Selon un premier art antérieur, il est connu de réaliser une combinaison optique multichamp multispectrale à l'aide de miroirs, de combinaisons de type zoom ou de type système bifocal situées sur chacune des voies de réception. La combinaison optique multichamp multispectrale obtenue présente l'inconvénient d'être très volumineuse et très complexe.

Selon un deuxième art antérieur décrit dans la demande de brevet FR 2 764 080, il est connu de réaliser une combinaison optique multichamp multispectrale à l'aide d'un montage de type Cassegrain. Le montage proposé présente l'inconvénient d'être seulement bichamp, c'est-à-dire de se limiter à deux champs, ce qui est insuffisant pour certains dispositifs d'imagerie.

L'invention propose une combinaison optique multichamp multispectrale, qui soit trichamp, qui soit relativement compacte et dans laquelle la dispersion chromatique reste relativement faible. La combinaison optique multichamp multispectrale selon l'invention reprend le montage de type Cassegrain du deuxième art antérieur, auquel est ajouté un troisième champ dit « grand champ » qui est obtenu par l'ajout d'une optique de focalisation grand champ et par la modification particulière du trajet de la lumière destinée à être focalisée, avant son éventuelle reprise par une optique de transport. On parle, sauf mention contraire, indifféremment de lumière ou de signal lumineux. En configuration grand champ, ladite lumière passe par l'optique de focalisation grand champ sans passer par les miroirs du montage de type Cassegrain. Pour passer en configuration grand champ, à partir de la configuration champ moyen, parmi les miroirs du montage de type Cassegrain, il suffit de déplacer le seul miroir secondaire. L'invention propose également un procédé de changement de champ dans une combinaison optique multichamp multispectrale.

Selon l'invention, il est prévu une combinaison optique multichamp de type Cassegrain présentant un plan focal image, comportant un premier miroir primaire concave troué fixe par rapport au plan focal image et un miroir secondaire convexe, la structure et la position, en configuration petit champ, des miroirs étant telles que la lumière qui est issue d'une scène extérieure considérée comme située à l'infini et qui est destinée à être focalisée au niveau du plan focal image soit entre-temps réfléchie d'abord par le premier miroir primaire puis par le miroir secondaire, comportant aussi un deuxième miroir primaire concave troué mobile par rapport au plan focal image, la structure et la position, en configuration champ moyen, le champ moyen étant plus grand que le petit champ, des miroirs étant telles que la lumière qui est issue d'une scène extérieure considérée comme située à l'infini et qui est destinée à être focalisée au niveau du plan focal image soit entre-temps réfléchie d'abord par le deuxième miroir primaire puis par le miroir secondaire, caractérisée en ce que le miroir secondaire est mobile par rapport au plan focal image, et en ce que la combinaison optique comporte également une optique de focalisation grand champ mobile par rapport au plan focal image, la structure et la position, en configuration grand champ, le grand champ étant plus grand que le champ moyen, des miroirs et de l'optique de focalisation grand champ étant telles que la lumière qui est issue d'une scène extérieure considérée comme située à l'infini et qui est destinée à être focalisée au niveau du plan focal image par l'intermédiaire de l'optique de focalisation grand champ ne soit entre-temps réfléchie par aucun desdits miroirs primaire ou secondaire.

Selon l'invention, il est également prévu un procédé de changement de champ dans une combinaison optique multichamp de type Cassegrain comportant un miroir primaire petit champ, un miroir primaire champ moyen et un miroir secondaire, comprenant, lors du passage d'une configuration petit champ à une configuration champ moyen, une étape de déplacement du miroir primaire champ moyen de manière à ce que le miroir primaire champ moyen occulte la lumière réfléchie par le miroir primaire petit champ en direction du miroir secondaire, caractérisé en ce que le procédé comprend aussi, lors du passage d'une configuration champ moyen à une configuration grand champ, une étape de déplacement du miroir secondaire et d'une optique de focalisation grand champ de manière à ce que l'optique de focalisation grand champ focalise la lumière venant de l'extérieur sans que celle-ci soit réfléchie par l'un des miroirs primaire ou secondaire de la combinaison optique.

Le champ moyen est à la fois plus petit que le grand champ et plus grand que le petit champ. Le montage de type Cassegrain permet à l'architecture d'être facilement multispectrale car les miroirs, par exemple en aluminium, présentent très peu de dispersion chromatique. La combinaison optique selon l'invention pourrait aussi être utilisée dans un seul domaine spectral de sensibilité, mais elle perdrait de son intérêt.

L'invention sera mieux comprise et d'autres particularités et avantages apparaîtront à l'aide de la description ci-après et des dessins joints, donnés à titre d'exemples, où :
- la figure 1 représente schématiquement un exemple d'une combinaison optique multichamp multispectrale selon l'invention en configuration petit champ ;
- la figure 2 représente schématiquement un exemple d'une combinaison optique multichamp multispectrale selon l'invention en configuration champ moyen ;
- la figure 3 représente schématiquement un exemple d'un mode de réalisation d'une combinaison optique multichamp multispectrale selon l'invention en configuration grand champ ;
- la figure 4 représente schématiquement un exemple d'un autre mode de réalisation d'une combinaison optique multichamp multispectrale selon l'invention en configuration grand champ.

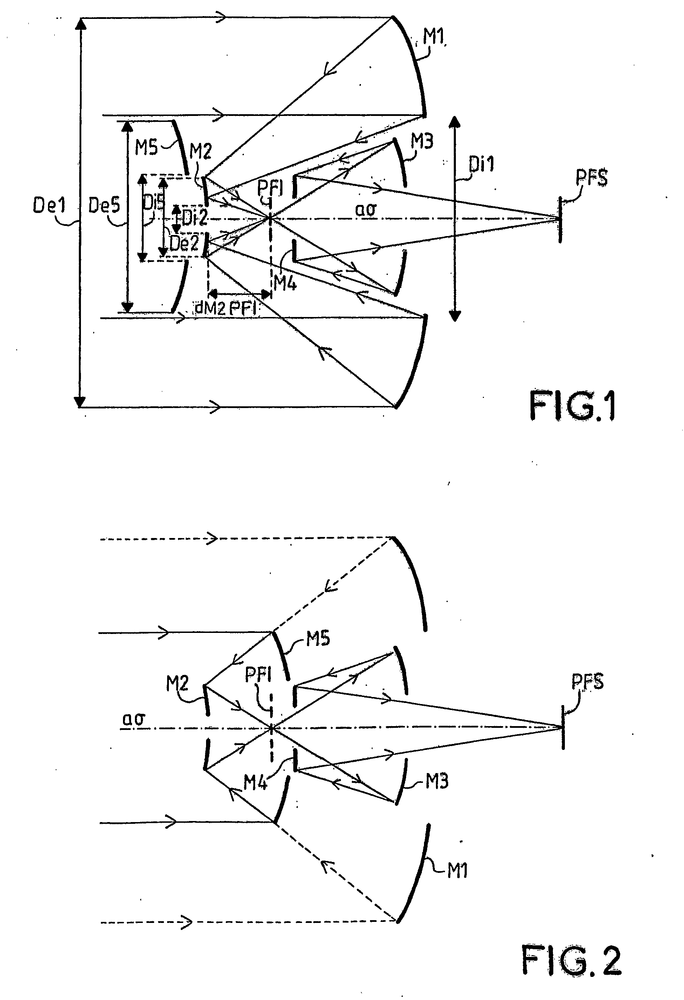

De préférence, dans la combinaison optique selon l'invention, le plan focal image est un plan focal image intermédiaire. La combinaison optique présente alors aussi un plan focal image de sortie, situé en aval du plan focal image intermédiaire, le sens amont-aval correspondant au sens de propagation de la lumière arrivant de l'extérieur pour être focalisée, c'est-à-dire de gauche à droite sur l'ensemble des figures 1 à 4. Afin de transporter l'image du plan focal image intermédiaire au plan focal image de sortie, la combinaison optique comporte une optique de transport située entre le plan focal image intermédiaire et le plan focal image de sortie. Ladite optique de transport est constituée de deux miroirs de transport troués, fixes par rapport au plan focal image intermédiaire, situés entre le plan focal image intermédiaire et le plan focal image de sortie et structurés et disposés de manière à ce que la lumière qui est issue d'une image située au niveau du plan focal image intermédiaire et qui est destinée à former une image située au niveau du plan focal image de sortie soit entre-temps d'abord réfléchie par le miroir de transport le plus proche du plan focal image de sortie, ledit miroir étant concave, puis réfléchie par le miroir de transport le plus proche du plan focal image intermédiaire. Les signaux lumineux des différentes bandes spectrales correspondant aux détecteurs des différentes voies de réception sont séparés juste en aval de l'optique de transport ; la combinaison optique ne présente donc préférentiellement pas d'optique de transport supplémentaire après séparation des différente bandes spectrales. La présence d'une optique de transport a l'avantage de conférer à la combinaison optique un tirage mécanique important entre l'arrière du miroir primaire de la configuration petit champ et le plan focal de sortie, permettant ainsi de disposer aisément les éléments de séparation spectrale sans requérir d'optiques de transport supplémentaires. L'optique de transport est de préférence structurée et disposée de manière à ce que la pupille de sortie de la combinaison optique soit située au voisinage du miroir de transport le plus proche du plan focal image intermédiaire, ladite pupille de sortie étant avantageusement située à l'intérieur de l'optique de transport, c'est-à-dire entre les deux miroirs qui constituent l'optique de transport. Cependant, cette focalisation au niveau du plan focal image de sortie réalisée directement après séparation spectrale sans utilisation d'optique de transport supplémentaire présente l'inconvénient de rendre difficile une conjugaison de pupille sur l'écran froid des détecteurs infrarouges des différentes voies de réception, ce qui produit du flux de structure parasite et ce qui s'ajoute au flux de structure parasite provenant de l'occultation centrale due au montage de type Cassegrain. Il peut alors devenir nécessaire d'ajouter des moyens de réduction de flux de structure parasite, ce qui a l'inconvénient d'augmenter la complexité de la combinaison optique mais dans des proportions moindres que ne le ferait l'adjonction d'optiques de transport supplémentaires après séparation spectrale. Parmi les moyens classiques de réduction de flux de structure parasite, on peut citer à titre d'exemples, la mise en place de baffles froids ou à faible émissivité de type miroirs orientés ou surfaces de microtrièdres, ou bien l'emploi de matériaux à luminescence négative.

Pour passer d'une configuration champ moyen à une configuration grand champ, un exemple de procédé de changement de champ selon l'invention comprend une étape de déplacement du miroir secondaire et de l'optique de focalisation grand champ. De préférence, cette seule étape suffit au passage en configuration grand champ. Ladite étape de déplacement consiste en une translation rectiligne simultanée du miroir secondaire et de l'optique de focalisation grand champ. Pour cela, la combinaison optique selon l'invention comporte un système de translation rectiligne simultanée du miroir secondaire et de l'optique de focalisation grand champ. Le miroir secondaire et l'optique de focalisation grand champ sont alors avantageusement solidaires. La translation s'effectue préférentiellement le long de l'axe optique de la combinaison optique jusqu'à ce que le plan focal de l'optique de focalisation grand champ coïncide avec la plan focal image le plus proche du miroir secondaire, c'est-à-dire le plan focal image intermédiaire lorsque la combinaison optique présente deux plans focaux image. Le balourd est préférentiellement compensé à l'aide d'un mécanisme de compensation de balourd, lequel mécanisme présente toutefois l'inconvénient d'être relativement complexe.

Dans une variante préférentielle d'une combinaison optique selon l'invention du type comprenant un déplacement par translation du miroir secondaire et de l'optique de focalisation grand champ, le miroir secondaire consiste en une métallisation de la partie périphérique de la face arrière du dernier élément optique de l'optique de focalisation grand champ. Ainsi dans le cas d'une optique de focalisation grand champ purement dioptrique, la partie centrale de la dernière lentille de l'optique de focalisation grand champ sert de lentille de champ en configuration grand champ tandis que la partie périphérique de ladite dernière lentille sert de miroir secondaire en configuration petit champ comme en configuration champ moyen.

Pour passer d'une configuration champ moyen à une configuration grand champ, un exemple de procédé de changement de champ selon l'invention comprend une étape de déplacement du miroir secondaire et de l'optique de focalisation grand champ. De préférence, cette seule étape suffit au passage en configuration grand champ. Ladite étape de déplacement consiste en une rotation mettant en place l'optique de focalisation grand champ tout en escamotant le miroir secondaire. Pour cela, la combinaison optique comporte un système de rotation mettant en place l'optique de focalisation grand champ tout en escamotant le miroir secondaire. Le miroir secondaire et l'optique de focalisation grand champ sont avantageusement montés sur une structure qui est mobile en rotation et qui comporte une ou plusieurs masselottes compensant le balourd. Le mécanisme de compensation de balourd est ici beaucoup plus simple dans la mesure où il se limite à quelques masselottes disposées sur la structure comportant le miroir secondaire et l'optique de focalisation grand champ, lesdites masselottes permettant ainsi de réaliser l'équilibrage de ladite structure qui reste équilibrée pendant tout le mouvement de rotation. La structure, le miroir secondaire, l'optique de focalisation grand champ, et la ou les masselottes sont tous solidaires les uns des autres. Ainsi, un simple mouvement de rotation permet d'escamoter le miroir secondaire au profit de l'optique de focalisation grand champ sans nécessiter de mécanisme complémentaire de compensation de balourd.

Dans la combinaison optique selon l'invention, l'optique de focalisation grand champ est de préférence purement dioptrique. Ainsi, l'optique de focalisation grand champ est très compacte. L'optique de focalisation grand champ, quoique purement dioptrique, n'est pas trop dispersive, car le grossissement en configuration grand champ est peu important, et il y a donc moins de « séparation des images » qu'en configurations champ moyen ou petit champ. Lorsque l'optique de focalisation grand champ est mise en place dans la combinaison optique en configuration grand champ, le plan focal image de l'optique de focalisation grand champ coïncide avec le premier plan focal image rencontré en aval du miroir secondaire dans les autres configurations, ce premier plan focal image étant le plan focal image intermédiaire lorsque la combinaison optique comporte deux plans focaux.

De préférence, l'optique de focalisation grand champ avantageusement purement dioptrique a une courte focale et un petit diamètre, sa focale étant plus petite que la distance entre d'une part la partie centrale avantageusement trouée du miroir secondaire en configuration petit champ ou champ moyen et d'autre part le plan focal image le plus proche du miroir secondaire, son diamètre étant plus petit que le diamètre externe du miroir secondaire. L'optique de focalisation grand champ est avantageusement une optique multispectrale dont le domaine spectral de sensibilité s'étend du visible à l'infrarouge lointain. Grâce à sa courte focale et à son petit diamètre, cette optique de focalisation grand champ multispectrale peut être réalisée à coût relativement faible. Dans une variante optionnelle, cette optique de focalisation grand champ n'est plus multispectrale, son domaine spectral de sensibilité est limité à l'infrarouge lointain, ce qui est opérationnellement envisageable, compte tenu du fait que la configuration grand champ est généralement limitée à l'opération de détection des cibles. Le coût de cette dernière optique de focalisation grand champ dont le domaine de sensibilité est limitée à la bande III de l'infrarouge est encore plus faible.

La figure 1 représente schématiquement un exemple d'une combinaison optique multichamp multispectrale selon l'invention en configuration petit champ. L'axe optique ao de la combinaison optique est représentée en traits mixtes, la combinaison optique étant un système optique centré présentant sensiblement une symétrie de révolution autour dudit axe optique ao. On parlera indifféremment de la lumière ou des rayons lumineux ou encore du signal lumineux, sauf mention contraire. Le trajet des rayons lumineux est représenté par des flèches orientées dans le sens de propagation des dits rayons lumineux. Les rayons lumineux représentés par des flèches en traits pointillés représentent des rayons lumineux masqués ou occultés par des éléments de la combinaison optique. La combinaison optique selon l'invention comporte un premier miroir primaire M1, un deuxième miroir primaire M5, un miroir secondaire M2, un premier miroir de transport M3, un deuxième miroir de transport M4, les miroirs de transport M3 et M4 constituant l'optique de transport. Comme la combinaison optique selon l'invention est de type Cassegrain, la dénomination miroir « primaire » et miroir « secondaire » est donnée par analogie au montage Cassegrain classique selon la fonction des miroirs considérés. La combinaison optique présente un plan focal image situé juste en aval du miroir secondaire M2, c'est le plan focal image intermédiaire PFI. La combinaison optique présente un autre plan focal image situé en aval de l'optique de transport, c'est le plan focal image de sortie PFS. Pour des raisons de simplicité et de lisibilité de la figure 1, un seul plan focal image de sortie PFS a été représenté; les dispositifs d'imagerie usuels comportent des éléments de séparation spectrale qui ne sont pas représentés sur la figure 1 pour les mêmes raisons mais qui seraient situés entre le premier miroir de transport M3 et les différents plans focaux image de sortie.

Le premier miroir primaire M1 est concave, son diamètre externe étant De1, troué en sa partie centrale, son diamètre interne étant Di1 ; il est structuré et disposé de manière à ce que, en configuration petit champ (comme sur la figure 1), il réfléchisse les rayons lumineux arrivant sensiblement parallèlement sur sa face réfléchissante, c'est-à-dire issus d'une scène extérieure considérée comme située à l'infini (des rayons arrivant parfaitement parallèlement ne pourraient être issus que d'une scène vraiment située à l'infini), en direction du miroir secondaire M2.

Le deuxième miroir primaire M5 est concave, son diamètre externe étant De5, troué en sa partie centrale, son diamètre interne étant Di5 ; il est structuré et disposé de manière à ce que, en configuration champ moyen (voir sur la figure 2), il réfléchisse les rayons lumineux arrivant sensiblement parallèlement sur sa face réfléchissante en direction du miroir secondaire M2 de manière analogue au premier miroir primaire M1, tout en occulant alors les rayons lumineux réfléchis par le premier miroir primaire M1 en direction du miroir secondaire M2 ; en configuration petit champ (comme sur la figure 1), il est décalé de manière à ne pas occulter les rayons lumineux réfléchis par le premier miroir primaire M1 en direction du miroir secondaire M2. Le diamètre interne Di5 du deuxième miroir primaire M5 est inférieur au diamètre interne Di1 du premier miroir primaire M1.

Le miroir secondaire M2 est convexe, son diamètre externe étant De2, troué en sa partie centrale, son diamètre interne étant Di2 ; il est structuré et disposé de manière à ce que, en configuration petit champ (comme sur la figure 1), il réfléchisse les rayons lumineux arrivant sur sa face réfléchissante en provenance du premier miroir primaire M1 (en provenance du deuxième miroir primaire M5 dans le cas de la figure 2 représentant une configuration champ moyen) en direction du premier miroir de transport M3. Entre le miroir secondaire M2 et le premier miroir de transport M3, les rayons lumineux sont focalisés au niveau du plan focal image intermédiaire PFI pour former une image de la scène extérieure considérée comme située à l'infini.

Le premier miroir de transport M3 est concave et troué en sa partie centrale ; il est structuré et disposé de manière à ce que, en configuration petit champ (comme sur la figure 1), il réfléchisse les rayons lumineux arrivant sur sa face réfléchissante en provenance du miroir secondaire M2 en direction du deuxième miroir de transport M4.

Le deuxième miroir de transport M4 est troué en sa partie centrale ; il est structuré et disposé de manière à ce que, en configuration petit champ (comme sur la figure 1), il réfléchisse les rayons lumineux arrivant sur sa face réfléchissante en provenance du premier miroir de transport M3 de manière à ce que lesdits rayons lumineux aillent se focaliser au niveau du plan focal image de sortie PFS pour y former une image de la scène extérieure considérée comme située à l'infini.

La distance dM2PFI représente la distance qui sépare la partie centrale trouée du miroir secondaire M2 du plan focal image intermédiaire PFI. Par rapport au corps et à la structure de la combinaison optique, le plan focal image intermédiaire PFI ainsi que le plan focal image de sortie PFS, sont fixes quelle que soit la configuration de champ adoptée. De même, le premier miroir primaire M1, le premier miroir de transport M3 et le deuxième miroir de transport M4, sont fixes quelle que soit la configuration de champ adoptée. Par contre, le deuxième miroir primaire M5 et le miroir secondaire M2 sont mobiles par rapport au corps de la combinaison optique et donc par rapport au plan focal image intermédiaire PFI.

La figure 2 représente schématiquement un exemple d'une combinaison optique multichamp multispectrale selon l'invention en configuration champ moyen. Tous les miroirs et plans focaux image occupent la même position que sur la figure 1, c'est-à-dire la même position qu'en configuration petit champ, sauf le deuxième miroir primaire M5 qui a subit une translation rectiligne en direction de l'optique de transport de manière d'une part à venir occulter les rayons lumineux (en traits pointillés) issus du premier miroir primaire M1 et d'autre part à réfléchir les rayons lumineux arrivant sensiblement parallèlement sur sa face réfléchissante en direction du miroir secondaire M2.

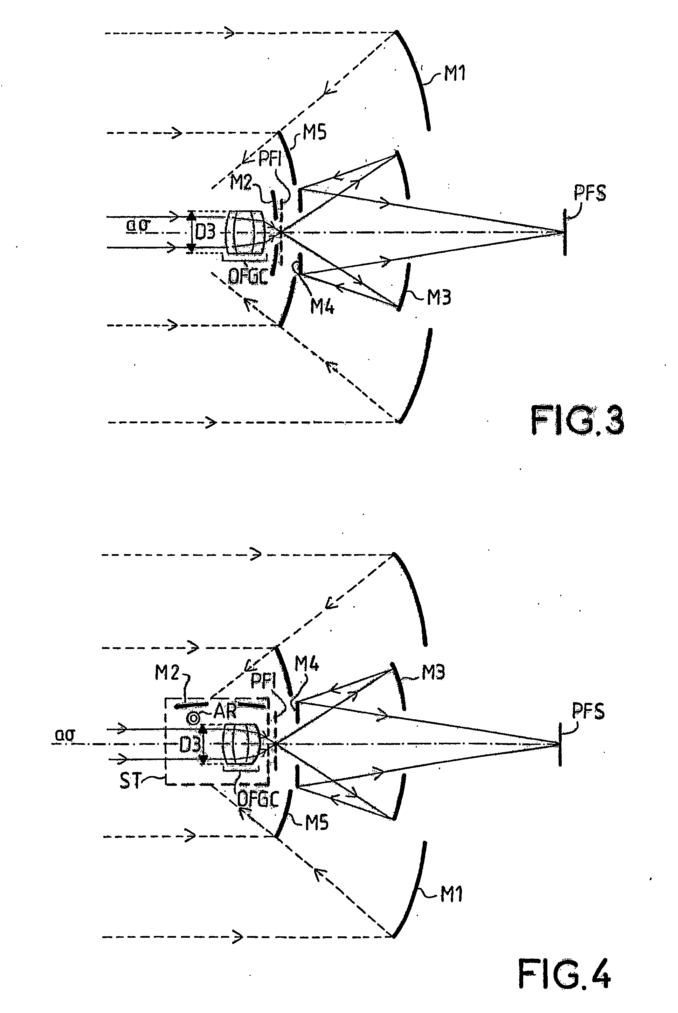

La figure 3 représente schématiquement un exemple d'un mode de réalisation d'une combinaison optique multichamp multispectrale selon l'invention en configuration grand champ. Tous les miroirs et plans focaux image occupent la même position que sur la figure 2, c'est-à-dire la même position qu'en configuration champ moyen, sauf le miroir secondaire M2 et une optique OFGC de focalisation grand champ laquelle n'intervenait pas sur le trajet des rayons lumineux focalisés au niveau des plans focaux image PFI et PFS et n'était donc pas représentée sur les figures précédentes 1 et 2 pour des raisons de clarté. L'ensemble solidaire constitué par le miroir secondaire M2 et par l'optique OFGC de focalisation grand champ a subit une translation rectiligne en direction de l'optique de transport de manière d'une part à ce que le miroir secondaire M2 ne puisse plus focaliser au niveau du plan focal intermédiaire PFI les rayons lumineux réfléchis par le premier miroir primaire M1 ou par le deuxième miroir primaire M5 et d'autre part à ce que les rayons lumineux arrivant sensiblement parallèlement sur l'optique OFGC de focalisation grand champ soient focalisés au niveau du plan focal image intermédiaire PFI et puissent ensuite être focalisés au niveau du plan focal image de sortie PFS par l'intermédiaire de l'optique de transport. L'optique OFGC de focalisation grand champ présente un diamètre D3 qui est inférieur au diamètre interne De2 du miroir secondaire M2 et une focale f3 qui est inférieure à la distance dM2PFI représentée sur la figure 1.

La figure 4 représente schématiquement un exemple d'un autre mode de réalisation d'une combinaison optique multichamp multispectrale selon l'invention en configuration grand champ. Tous les miroirs et plans focaux image occupent la même position que sur la figure 2, c'est-à-dire la même position qu'en configuration champ moyen, sauf le miroir secondaire M2 et une optique OFGC de focalisation grand champ laquelle n'intervenait pas sur le trajet des rayons lumineux focalisés au niveau des plans focaux image PFI et PFS et n'était donc pas représentée sur les figures précédentes 1 et 2 pour des raisons de clarté. L'ensemble solidaire constitué par le miroir secondaire M2 et par l'optique OFGC de focalisation grand champ est monté solidairement sur une structure ST symbolisée par un carré en traits pointillés. La structure ST est mobile en rotation par rapport à un axe AR de rotation. Les masselottes, non représentées ici sur la figure 4 pour des raisons de clarté, sont montées solidairement sur la structure ST de manière à ce que la structure ST reste équilibrée pendant tout son mouvement de rotation autour de l'axe AR de rotation. La structure ST a subit une rotation autour de l'axe AR de rotation de manière d'une part à ce que le miroir secondaire M2 ne puisse plus focaliser au niveau du plan focal intermédiaire PFI les rayons lumineux réfléchis par le premier miroir primaire M1 ou par le deuxième miroir primaire M5 et d'autre part à ce que les rayons lumineux arrivant sensiblement parallèlement sur l'optique OFGC de focalisation grand champ soient focalisés au niveau du plan focal image intermédiaire PFI et puissent ensuite être focalisés au niveau du plan focal image de sortie PFS par l'intermédiaire de l'optique de transport. L'optique OFGC de focalisation grand champ présente un diamètre D3 qui est inférieur au diamètre interne De2 du miroir secondaire M2 et une focale f3 qui est inférieure à la distance dM2PFI représentée sur la figure 1.

## Revendications

1. Combinaison optique multichamp de type Cassegrain
présentant un plan focal image (PFI),
comportant un premier miroir primaire (M1) concave troué fixe par rapport au plan focal image (PFI) et un miroir secondaire (M2) convexe,
la structure et la position, en configuration petit champ, des miroirs (M1, M2) étant telles que la lumière qui est issue d'une scène extérieure considérée comme située à l'infini et qui est destinée à être focalisée au niveau du plan focal image (PFI) soit entre-temps réfléchie d'abord par le premier miroir primaire (M1) puis par le miroir secondaire (M2),
comportant aussi un deuxième miroir primaire (M5) concave troué mobile par rapport au plan focal image (PFI),
la structure et la position, en configuration champ moyen, le champ moyen étant plus grand que le petit champ, des miroirs (M1, M2, M5) étant telles que la lumière qui est issue d'une scène extérieure considérée comme située à l'infini et qui est destinée à être focalisée au niveau du plan focal image (PFI) soit entre-temps réfléchie d'abord par le deuxième miroir primaire (M5) puis par le miroir secondaire (M2),
**caractérisée en ce que** le miroir secondaire (M2) est mobile par rapport au plan focal image (PFI),
et **en ce que** la combinaison optique comporte également une optique (OFGC) de focalisation grand champ mobile par rapport au plan focal image (PFI),
la structure et la position, en configuration grand champ, le grand champ étant plus grand que le champ moyen, des miroirs (M1, M2, M5) et de l'optique (OFGC) de focalisation grand champ étant telles que la lumière qui est issue d'une scène extérieure considérée comme située à l'infini et qui est destinée à être focalisée au niveau du plan focal image (PFI) par l'intermédiaire de l'optique (OFGC) de focalisation grand champ ne soit entre-temps réfléchie par aucun desdits miroirs primaire (M1, M5) ou secondaire (M2).

2. Combinaison optique selon la revendication 1, **caractérisée en ce que** le plan focal image (PFI) est un plan focal image intermédiaire (PFI),
**en ce que** la combinaison optique présente aussi un plan focal image de sortie (PFS),
**en ce que** la combinaison optique comporte une optique de transport entre le plan focal image intermédiaire (PFI) et le plan focal image de sortie (PFS),
et **en ce que** l'optique de transport est constituée de deux miroirs de transport (M3, M4) troués, fixes par rapport au plan focal image intermédiaire (PFI), situés entre le plan focal image intermédiaire (PFI) et le pian focal image de sortie (PFS) et structurés et disposés de manière à ce que la lumière qui est issue d'une image située au niveau du plan focal image intermédiaire (PFI) et qui est destinée à former une image située au niveau du plan focal image de sortie (PFS) soit entre-temps d'abord réfléchie par le miroir de transport (M3) le plus proche du plan focal image de sortie (PFS), ledit miroir (M3) étant concave, puis réfléchie par le miroir de transport (M4) le plus proche du plan focal image intermédiaire (PFI).

3. Combinaison optique selon la revendication 2, **caractérisée en ce que** la pupille de sortie de la combinaison optique est située au voisinage du miroir de transport (M4) le plus proche du plan focal image intermédiaire (PFI).

4. Combinaison optique selon l'une quelconque des revendications précédentes, **caractérisée en ce que** l'optique (OFGC) de focalisation grand champ est purement dioptrique.

5. Combinaison optique selon la revendication 4, **caractérisée en ce que** l'optique (OFGC) de localisation grand champ a une courte focale (f3) et un petit diamètre (D3), sa focale (f3) étant plus petite que la distance (dM2PFI) entre d'une part la partie centrale du miroir secondaire (M2) en configuration petit champ ou champ moyen et d'autre part le plan focal image (PFI) le plus proche du miroir secondaire (M2), son diamètre (D3) étant plus petit que le diamètre externe (De2) du miroir secondaire (M2).

6. Combinaison optique selon l'une quelconque des revendications précédentes, **caractérisée en ce que** l'optique (OFGC) de focalisation grand champ est une optique multispectrale dont le domaine spectral de sensibilité s'étend du visible à l'infrarouge lointain.

7. Combinaison optique selon l'une quelconque des revendications précédentes, **caractérisée en ce que** la combinaison optique comporte un système de rotation mettant en place l'optique (OFGC) de focalisation grand champ tout en escamotant le miroir secondaire (M2).

8. Combinaison optique selon la revendication 7, **caractérisé en ce que** le miroir secondaire (M2) et l'optique (OFGC) de focalisation grand champ sont montés sur une structure (ST) qui est mobile en rotation et qui comporte une ou plusieurs masselottes compensant le balourd.

9. Combinaison optique selon l'une quelconque des revendications 1 à 6, **caractérisée en ce que** le miroir secondaire est troué en sa partie centrale et **en ce que** la combinaison optique comporte un système de translation rectiligne simultanée du miroir secondaire (M2) et de l'optique (OFGC) de focalisation grand champ.

10. Combinaison optique selon la revendication 9, **caractérisé en ce que** le miroir secondaire (M2) et l'optique (OFGC) de focalisation grand champ sont solidaires.

11. Combinaison optique selon l'une quelconque des revendications 9 à 10, **caractérisée en ce que** le miroir secondaire (M2) consiste en une métallisation de la partie périphérique de la face arrière du dernier élément optique de l'optique (OFGC) de focalisation grand champ.

12. Dispositif d'imagerie comportant une optique d'entrée **caractérisé en ce que** l'optique d'entrée comporte une combinaison optique selon l'une quelconque des revendications précédentes.

13. Dispositif d'imagerie selon la revendication 12, **caractérisé en ce que** la combinaison optique appartient à l'optique d'entrée d'une ou de plusieurs voies de réception de signal lumineux.

14. Dispositif d'imagerie selon la revendication 13, **caractérisé en ce que** les voies de réception sont au nombre d'au moins trois ayant respectivement pour domaine spectral de sensibilité, le proche infrarouge, l'infrarouge moyen, l'infrarouge lointain.

15. Procédé de changement de champ dans une combinaison optique multichamp de type Cassegrain définie dans la revendication 1, comportant un miroir primaire concave (M1) petit champ, un miroir primaire concave (M5) champ moyen et un miroir secondaire convexe (M2), les miroirs primaires (M1, M5) étant troués,
comprenant, lors du passage d'une configuration petit champ à une configuration champ moyen, une étape de déplacement du miroir primaire (M5) champ moyen de manière à ce que le miroir primaire (M5) champ moyen occulte la lumière réfléchie par le miroir primaire (M1) petit champ en direction du miroir secondaire (M2),
**caractérisé en ce que** le procédé comprend aussi, lors du passage d'une configuration champ moyen à une configuration grand champ, une étape de déplacement du miroir secondaire (M2) et d'une optique (OFGC) de focalisation grand champ de manière à ce que l'optique (OFGC) de focalisation grand champ focalise la lumière venant de l'extérieur sans que celle-ci soit réfléchie par l'un des miroirs primaire (M1, M5) ou secondaire (M2) de la combinaison optique.

16. Procédé de changement de champ selon la revendication 15, **caractérisé en ce que** l'optique (OFGC) de focalisation grand champ est purement dioptrique.

17. Procédé de changement de champ selon l'une quelconque des revendications 15 à 16, **caractérisé en ce que** le miroir secondaire (M2) étant troué en sa partie centrale, l'étape de déplacement du miroir secondaire (M2) et de l'optique (OFGC) de focalisation grand champ consiste en une translation rectiligne simultanée du miroir secondaire (M2) et de l'optique (OFGC) de focalisation grand champ.

18. Procédé de changement de champ selon l'une quelconque des revendications 15 à 16, **caractérisé en ce que** l'étape de déplacement du miroir secondaire (M2) et de l'optique (OFGC) de focalisation grand champ consiste en une rotation mettant en place l'optique (OFGC) de focalisation grand champ tout en escamotant le miroir secondaire (M2).

## Claims

1. Cassegrain-type multiple-field optical combination
having an image focal plane (IFP),
comprising a first holed concave primary mirror (M1) that is fixed relative to the image focal plane (IFP) and a convex secondary mirror (M2),
the structure and the position, in narrow-field configuration, of the mirrors (M1, M2) being such that the light that emanates from an external scene considered as being located at infinity and is intended to be focused in the image focal plane (IFP) is meanwhile reflected firstly by the first primary mirror (M1) and then by the secondary mirror (M2),
which also includes a second holed concave primary mirror (M5) that can move relative to the image focal plane (IFP),
the structure and the position, in medium-field configuration, since the medium field is wider than the narrow field, of the mirrors (M1, M2, M5) being such that the light that emanates from an external scene considered as being located at infinity and is intended to be focused in the image focal plane (IFP) is meanwhile reflected firstly by the second primary mirror (M5) and then by the secondary mirror (M2),
**characterized in that** the secondary mirror (M2) can move relative to the image focal plane (I FP),
and **in that** the optical combination also includes a wide-field focusing optic (WFFO) that can move relative to the image focal plane (IFP),
the structure and the position, in wide-field configuration, since the wide field is larger than the medium field, of the mirrors (M1, M2, M5) and of the wide-field focusing optic (WFFO) being such that the light that emanates from an external scene considered as being located at infinity and is intended to be focused in the image focal plane (IFP) by means of the wide-field focusing optic (WFFO) is not meanwhile reflected by any of said primary (M1, M5) or secondary (M2) mirrors.

2. Optical combination according to Claim 1, **characterized in that** the image focal plane (IFP) is an intermediate image focal plane (IFP),
**in that** the optical combination also has an exit image focal plane (EFP),
**in that** the optical combination includes a transport optic between the intermediate image focal plane (IFP) and the exit image focal plane (EFP),
and **in that** the transport optic consists of two holed transport mirrors (M3, M4) that are fixed relative to the intermediate image focal plane (IFP), which lie between the intermediate image focal plane (IFP) and the exit image focal plane (EFP) and are structured and placed so that the light that emanates from an image located in the intermediate image focal plane (IFP) and is intended to form an image located in the exit image focal plane (EFP) is meanwhile firstly reflected by the transport mirror (M3) closest to the exit image focal plane (EFP), since said mirror (M3) is concave, and then reflected by the transport mirror (M4) closest to the intermediate image focal plane (IFP).

3. Optical combination according to Claim 2, **characterized in that** the exit pupil of the optical combination is located near the transport mirror (M4) closest to the intermediate image focal plane (IFP).

4. Optical combination according to any one of the preceding claims, **characterized in that** the wide-field focusing optic (WFFO) is purely refractive.

5. Optical combination according to Claim 4, **characterized in that** the wide-field focusing optic (WFFO) has a short focal length (f3) and a small diameter (D3), its focal length (f3) being shorter than the distance (dM2IFP) between, on the one hand, the central part of the secondary mirror (M2) in narrow-field or medium-field configuration and, on the other hand, the image focal plane (IFP) closest to the secondary mirror (M2), its diameter (D3) being smaller than the external diameter (De2) of the secondary mirror (M2).

6. Optical combination according to any one of the preceding claims, **characterized in that** the wide-field focusing optic (WFFO) is a multispectral optic, the spectral sensitivity range of which extends from the visible into the far infrared.

7. Optical combination according to any one of the preceding claims, **characterized in that** the optical combination includes a rotation system that brings the wide-field focusing optic (WFFO) into position while retracting the secondary mirror (M2).

8. Optical combination according to Claim 7, **characterized in that** the secondary mirror (M2) and the wide-field focusing optic (WFFO) are mounted on a structure (ST) which can rotate and includes one or more weights to compensate for the imbalance.

9. Optical combination according to any one of Claims 1 to 6, **characterized in that** the secondary mirror is holed in its central part and **in that** the optical combination includes a system for the simultaneous linear translation of the secondary mirror (M2) and of the wide-field focusing optic (WFFO).

10. Optical combination according to Claim 9, **characterized in that** the secondary mirror (M2) and the wide-field focusing optic (WFFO) are integral.

11. Optical combination according to any one of Claims 9 to 10, **characterized in that** the secondary mirror (M2) consists of a metallization of the peripheral part of the rear face of the final optical element of the wide-field focusing optic (WFFO).

12. Imaging device comprising an input optic, **characterized in that** the input optic comprises an optical combination according to any one of the preceding claims.

13. Imaging device according to Claim 12, **characterized in that** the optical combination belongs to the input optic of one or more light-signal receive channels.

14. Imaging device according to Claim 13, **characterized in that** the number of receive channels is at least three, these having, as spectral sensitivity range, the near infrared, the mid-infrared and the far infrared, respectively.

15. Method of changing field in a cassegrain-type multiple-field optical combination, defined in Claim 1, comprising a narrow-field primary concave mirror (M1), a medium-field concave primary mirror (M5) and a convex secondary mirror (M2), the primary mirrors (M1, M5) being holed,
comprising, when passing from a narrow-field configuration to a medium-field configuration, a step of moving the medium-field primary mirror (M5) so that the medium-field primary mirror (M5) blocks the light reflected by the narrow-field primary mirror (M1) in the direction of the secondary mirror (M2),
**characterized in that** the method also includes, during passage from a medium-field configuration to a wide-field configuration, a step of moving the secondary mirror (M2) and of moving a wide-field focusing optic (WFFO) so that the wide-field focusing optic (WFFO) focuses the light coming from the outside without it being reflected by one of the primary (M1, M5) or secondary (M2) mirrors of the optical combination.

16. Method of changing field according to Claim 15, **characterized in that** the wide-field focusing optic (WFFO) is purely refractive.

17. Method of changing field according to either of Claims 15 and 16, **characterized in that**, since the secondary mirror (M2) is holed in its central part, the step of moving the secondary mirror (M2) and the wide-field focusing optic (WFFO) consists of a simultaneous linear translation of the secondary mirror (M2) and of the wide-field focusing optic (WFFO).

18. Method of changing field according to either of Claims 15 and 16, **characterized in that** the step of moving the secondary mirror (M2) and the wide-field focusing optic (WFFO) consists of a rotation that brings the wide-field focusing optic (WFFO) into position while retracting the secondary mirror (M2).

## Patentansprüche

1. Optische Mehrfeld-Kombination vom Typ Cassegrain mit einer Bildbrennebene (PFI),
die einen ersten gelochten konkaven Primärspiegel (M1), der bezüglich der Bildbrennebene (PFI) fest ist, und einen konvexen Sekundärspiegel (M2) aufweist,
wobei der Aufbau und die Position der Spiegel (M1, M2) in einer Konfiguration mit kleinem Feld so sind, dass das von einer als im Unendlichen befindlich betrachteten äußeren Szene stammende Licht, das in Höhe der Bildbrennebene (PFI) fokussiert werden soll, zwischenzeitlich zunächst vom ersten Primärspiegel (M1) und dann vom Sekundärspiegel (M2) reflektiert wird,
und weiter einen zweiten gelochten konkaven Primärspiegel (M5) aufweist, der bezüglich der Bildbrennebene (PFI) beweglich ist,
wobei der Aufbau und die Position der Spiegel (M1, M2, M5) in einer Konfiguration mit einem mittleren Feld, das größer ist als das kleine Feld, so sind, dass das von einer als im Unendlichen befindlich betrachteten äußeren Szene stammende Licht, das in Höhe der Bildbrennebene (PFI) fokussiert werden soll, zwischenzeitlich zunächst vom zweiten Primärspiegel (M5) und dann vom Sekundärspiegel (M2) reflektiert wird,
**dadurch gekennzeichnet, dass** der Sekundärspiegel (M2) bezüglich der Bildbrennebene (PFI) beweglich ist,
und dass die optische Kombination weiter eine Fokussieroptik (OFGC) mit großem Feld aufweist, die bezüglich der Bildbrennebene (PFI) beweglich ist,
wobei der Aufbau und die Position der Spiegel (M1, M2, M5) und der Fokussieroptik mit großem Feld (OFGC) in einer Konfiguration mit großen Feld, wobei das große Feld größer ist als das mittlere Feld, so sind, dass das von einer als im Unendlichen befindlich betrachteten äußeren Szene stammende Licht, das in Höhe der Bildbrennebene (PFI) mittels der Fokussieroptik mit großem Feld (OFGC) fokussiert werden soll, zwischenzeitlich von keinem der Primärspiegel (M1, M5) oder Sekundärspiegel (M2) reflektiert wird.

2. Optische Kombination nach Anspruch 1, **dadurch gekennzeichnet, dass** die Bildbrennebene (PFI) eine Zwischenbildbrennebene (PFI) ist,
dass die optische Kombination auch eine Ausgangsbildbrennebene (PFS) aufweist,
dass die optische Kombination eine Übertragungsoptik zwischen der Zwischenbildbrennebene (PFI) und der Ausgangsbildbrennebene (PFS) aufweist,
und dass die Übertragungsoptik aus zwei gelochten Übertragungsspiegeln (M3, M4) besteht, die bezüglich der Zwischenbildbrennebene (PFI) fest sind, sich zwischen der Zwischenbildbrennebene (PFI) und der Ausgangsbildbrennebene (PFS) befinden und so aufgebaut und angeordnet sind, dass das von einem in Höhe der Zwischenbildbrennebene (PFI) befindlichen Bild stammende Licht, das das dazu bestimmt ist, ein Bild zu formen, das sich in Höhe der Ausgangsbildbrennebene (PFS) befindet, zwischenzeitlich zunächst von dem Übertragungsspiegel (M3) reflektiert wird, der der Ausgangsbildbrennebene (PFS) am nächsten liegt, wobei der Spiegel (M3) konkav ist, und dann vom Übertragungsspiegel (M4) reflektiert wird, der der Zwischenbildbrennebene (PFI) am nächsten liegt.

3. Optische Kombination nach Anspruch 2, **dadurch gekennzeichnet, dass** die Ausgangspupille der optischen Kombination sich in der Nähe des Übertragungsspiegels (M4) befindet, der der Zwischenbildbrennebene (PFI) am nächsten ist.

4. Optische Kombination nach einem der vorhergehenden Ansprüche, **dadurch gekennzeichnet, dass** die Fokussieroptik mit großem Feld (OFGC) rein dioptrisch ist.

5. Optische Kombination nach Anspruch 4, **dadurch gekennzeichnet, dass** die Fokussieroptik mit großem Feld (OFGC) eine kurze Brennweite (f3) und einen kleinen Durchmesser (D3) aufweist, wobei ihre Brennweite (f3) kleiner ist als die Entfernung (dM2PFI) zwischen einerseits dem zentralen Bereich des Sekundärspiegels (M2) in der Konfiguration mit kleinem Feld oder mit mittlerem Feld und andererseits der Bildbrennebene (PFI), die dem Sekundärspiegel (M2) am nächsten liegt, wobei ihr Durchmesser (D3) kleiner ist als der Außendurchmesser (De2) des Sekundärspiegels (M2).

6. Optische Kombination nach einem der vorhergehenden Ansprüche, **dadurch gekennzeichnet, dass** die Fokussieroptik mit großem Feld (OFGC) eine multispektrale Optik ist, wobei der Spektralbereich ihrer Empfindlichkeit sich vom sichtbaren Licht bis zum fernen Infrarotbereich erstreckt.

7. Optische Kombination nach einem der vorhergehenden Ansprüche, **dadurch gekennzeichnet, dass** sie ein Drehsystem aufweist, das die Fokussieroptik mit großem Feld (OFGC) in Stellung bringt und gleichzeitig den Sekundärspiegel (M2) wegklappt.

8. Optische Kombination nach Anspruch 7, **dadurch gekennzeichnet, dass** der Sekundärspiegel (M2) und die Fokussieroptik mit großem Feld (OFGC) auf einen Aufbau (ST) montiert sind, der drehbeweglich ist und eines oder mehrere Ausgleichsgewichte aufweist, die die Unwucht ausgleichen.

9. Optische Kombination nach einem der Ansprüche 1 bis 6, **dadurch gekennzeichnet, dass** der Sekundärspiegel in seinem mittleren Bereich gelocht ist, und dass die optische Kombination ein System zur gleichzeitigen geradlinigen Translationsverschiebung des Sekundärspiegels (M2) und der Fokussieroptik mit großem Feld (OFGC) aufweist.

10. Optische Kombination nach Anspruch 9, **dadurch gekennzeichnet, dass** der Sekundärspiegel (M2) und die Fokussieroptik mit großem Feld (OFGC) fest miteinander verbunden sind.

11. Optische Kombination nach einem der Ansprüche 9 bis 10, **dadurch gekennzeichnet, dass** der Sekundärspiegel (M2) aus einer Metallbeschichtung des Umfangsbereichs der Rückseite des letzten optischen Elements der Fokussieroptik mit großem Feld (OFGC) besteht.

12. Bildgebungsvorrichtung, die eine Eingangsoptik aufweist, **dadurch gekennzeichnet, dass** die Eingangsoptik eine optische Kombination gemäß einem der vorhergehenden Ansprüche aufweist.

13. Bildgebungsvorrichtung nach Anspruch 12, **dadurch gekennzeichnet, dass** die optische Kombination zur Eingangsoptik eines oder mehrerer Lichtsignal-Empfangskanäle gehört.

14. Bildgebungsvorrichtung nach Anspruch 13, **dadurch gekennzeichnet, dass** es mindestens drei Empfangskanäle gibt, die als spektralen Empfindlichkeitsbereich das nahe Infrarot, das mittlere Infrarot bzw. das ferne Infrarot haben.

15. Verfahren zum Feldwechsel in einer im Anspruch 1 definierten optischen Mehrfeld-Kombination vom Typ Cassegrain, die einen konkaven Primärspiegel mit kleinem Feld (M1), einen konkaven Primärspiegel mit mittlerem Feld (M5) und einen konvexen Sekundärspiegel (M2) aufweist, wobei die Primärspiegel (M1, M5) gelocht sind,
wobei das Verfahren beim Übergang von einer Konfiguration mit kleinem Feld in eine Konfiguration mit mittlerem Feld einen Schritt der Verschiebung des Primärspiegels mit mittlerem Feld (M5) aufweist, damit der Primärspiegel mit mittlerem Feld (M5) das vom Primärspiegel (M1) mit kleinem Feld reflektierte Licht in Richtung des Sekundärspiegels (M2) verdunkelt,
**dadurch gekennzeichnet, dass** das Verfahren ebenfalls beim Übergang von einer Konfiguration mit mittlerem Feld in eine Konfiguration mit großem Feld einen Schritt der Verschiebung des Sekundärspiegels (M2) und einer Fokussieroptik mit großem Feld (OFGC) aufweist, damit die Fokussieroptik mit großem Feld (OFGC) das von außen kommende Licht fokussiert, ohne dass es von einem der Primärspiegel (M1, M5) oder Sekundärspiegel (M2) der optischen Kombination reflektiert wird.

16. Feldwechselverfahren nach Anspruch 15, **dadurch gekennzeichnet, dass** die Fokussieroptik mit großem Feld (OFGC) rein dioptrisch ist.

17. Feldwechselverfahren nach einem der Ansprüche 15 bis 16, **dadurch gekennzeichnet, dass**, da der Sekundärspiegel (M2) in seinem mittleren Bereich gelocht ist, der Schritt der Verschiebung des Sekundärspiegels (M2) und der Fokussieroptik (OFGC) mit großem Feld in einer gleichzeitigen geradlinigen Translationsverschiebung des Sekundärspiegels (M2) und der Fokussieroptik (OFGC) mit großem Feld besteht.

18. Feldwechselverfahren nach einem der Ansprüche 15 bis 16, **dadurch gekennzeichnet, dass** der Schritt der Verschiebung des Sekundärspiegels (M2) und der Fokussieroptik mit großem Feld (OFGC) in einer Drehung besteht, die die Fokussieroptik mit großem Feld (OFGC) in Stellung bringt und gleichzeitig den Sekundärspiegel (M2) wegklappt.
